# EUROPEAN PATENT SPECIFICATION

(11) **EP 1 302 377 B1**
(45) Date of publication and mention of the grant of the patent: **21.10.2009**
(21) Application number: 02079265.1
(22) Date of filing: 15.10.2002
(51) Int. Cl.: B60T 7/20, B60T 13/08, B60T 11/10

(54) **Coupling device for a non-autonomously driven transport means**
Kuppelvorrichtung für ein nicht selbständig angetriebenes Transportmittel
Dispositif d'accouplement pour un moyen de transport sans traction autonome

(30) Priority: 15.10.2001 NL 1019172
(43) Date of publication of application: 16.04.2003
(73) Proprietor: TRIAS Transportwerktuigenindustrie B.V., 7320 AC Apeldoorn (NL)
(72) Inventor: Oosterkamp, Lenard Johannes, 8171 RM Vaassen (NL); Smit, Gerrit Johannes, 7321 DA Apeldoorn (NL)
(74) Representative: Dokter, Hendrik Daniel

(56) References cited:
- EP-A- 0 157 336
- EP-A- 0 386 939
- WO-A-00/73115
- DE-A- 3 502 150
- DE-A- 4 325 612

## Description

The invention relates to a coupling device for coupling a non-autonomously driven transport means to a tractive device. An example of a non-autonomously driven transport means is a semi-trailer coupled to a motor vehicle, designated as truck, suitable for this purpose.

A coupling device for coupling a semi-trailer to a truck is generally known. The known coupling device comprises a coupling table which is mounted on the truck and which bears a platform which is pivotable about a transverse axis and which is provided on its rearwardly directed side with a widening, wedge-shaped opening. The semi-trailer is provided on its underside with a so-called coupling plate for supporting on the platform of the coupling table, and with a downward directed pin, the so-called kingpin, which for the purpose of coupling is received in the wedge-shaped opening of the coupling table and can be secured in the narrowest part thereof.

It is inherent to the known coupling device that the operation of the brakes in a semi-trailer coupled to a truck using this coupling device does not take place by means of this coupling device. Hydraulic or pneumatic systems are generally applied to operate the brakes of a semi-trailer. Application of a hydraulic braking system in a hydraulically braked semi-trailer implies intervention in the hydraulic braking system of the semi-trailer, which can cause uncertainties about the division between warranty obligation and liability of truck manufacturer and semi-trailer manufacturer. In practice the permission of the manufacturer of the truck is required for application of a hydraulic braking system on the semi-trailer. Application of a pneumatic braking system in a hydraulically braked truck implies a modification of the truck, inter alia by building in a compressor and arranging a number of control valves and lines.

It is perceived as a drawback of the known coupling device that it is relatively expensive to purchase in combination with,an operating mechanism for the brakes of a semi-trailer. This drawback particularly makes itself felt in the case of semi-trailers which must be provided with a brake by reason of their weight, but wherein, in order to drive a truck in combination with such a semi-trailer, a driving license for a passenger car with trailer suffices. An additional drawback is the relatively great weight of the known coupling device and the additional provisions in the truck and the semi-trailer, which directly decreases the effective loading capacity of the truck-trailer combination.

EP 0 157 336 A2 discloses a coupling device comprising first frame mountable on a tractive device, a second frame which is mountable on the first frame and which is rotatable about a rotation axis perpendicular to the longitudinal and transverse direction of the tractive device, and a coupling shaft which is connected to the transport means and oriented in transverse direction thereof and which is coupled to the second frame in a manner such that it is displaceable through a determined distance relative to the second frame in transverse direction perpendicularly of said rotation axis, said coupling device being provided with operating means for a braking device.

It is an object of the invention to provide a coupling device, the application of which does not require either intervention in the braking system of a truck or the building in of additional components in the truck for the purpose of the braking system of the transport means.

It is a particular object to provide a coupling device suitable for operating a mechanical braking system of a transport means.

A further object is to reduce the weight of the combination of a non-autonomously driven transport means and a tractive device.

These objects are achieved with a coupling device according to claim 1

A coupling device according to the invention can be mounted on a truck without any modification in the construction of this truck being required for this purpose. A semi-trailer coupled to a truck is rotatable in a plane parallel to the longitudinal and transverse direction of this semi-trailer about the rotation axis of the rotatable frame of the coupling device, whereby the semi-trailer can follow the truck in bends, and is pivotable on the coupling shaft, whereby the semi-trailer can follow the truck on sloping road sections without friction thereby occurring in the coupling device. The fact that the coupling shaft is displaceable through a determined distance enables the use of a so-called overrun brake in a semi-trailer.

An operating lever coupled to a brake cable provides the advantage that a transport means coupled to a tractive device can be provided with a mechanically operated braking system, so that it is not necessary to provide a truck with a compressor, or to make modifications in the hydraulic braking system of a truck.

In one embodiment of a coupling device according to the invention the coupling shaft is coupled to the frame by means of roller bearings.

In order to prevent wear of the transport means due to the contact with the coupling shaft, the coupling shaft is preferably enclosed in its longitudinal direction between enclosing elements connected releasably to the transport means.

In a favourable embodiment of a coupling device according to the invention the first and the second frame comprise co-acting parts of a rotating assembly.

It is noted that, although the foregoing relates to a coupling device for coupling a semi-trailer to a truck, the invention is by no means limited thereto.

The coupling device according to the invention can likewise be applied for coupling a transport means formed by the fixed part of a trailer to a tractive device formed by the bogie of this trailer.

The invention will be elucidated in the following on the basis of embodiments, with reference to the drawings.

In the drawings:
Fig. 1 shows a cut-away perspective view of a first embodiment of a coupling device according to the invention for coupling a semi-trailer to a truck, and
Fig. 2 shows a cut-away perspective view of a second embodiment of a coupling device according to the invention for coupling a trailer to a bogie.

Corresponding components are designated in the drawings with the same reference numerals.

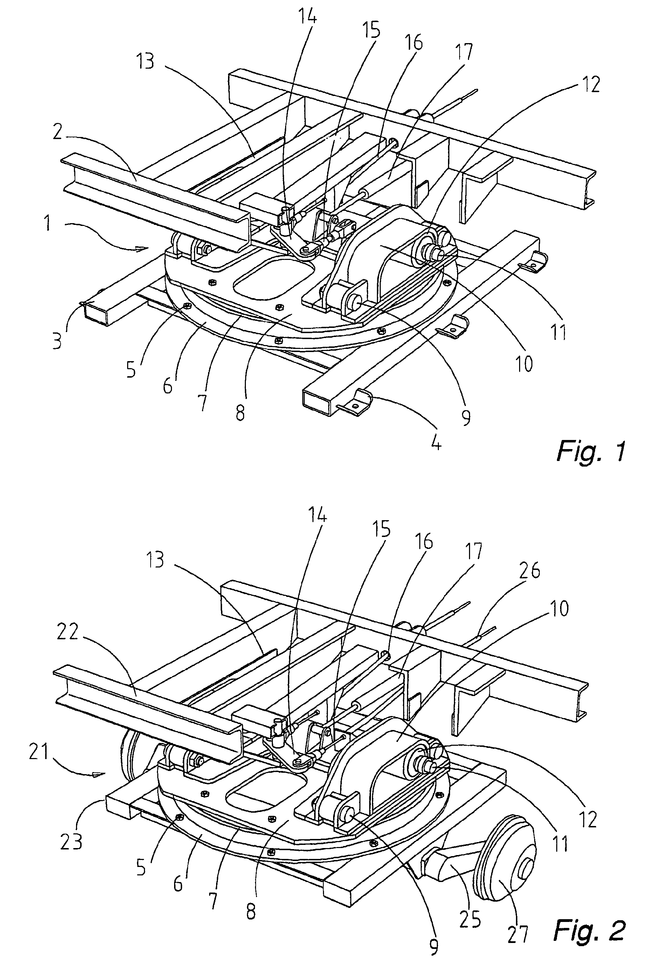

Fig. 1 shows a coupling device 1 for coupling a semi-trailer, of which a part of chassis 2 is shown, to a truck (not shown). Coupling device 1 comprises a subframe 3 which can be fixed at standardized positions on the frame of a truck using shoes 4, and on which the static part 6 of a rotating assembly is fixed by means of bolts 5. Fixed on the rotatable part 7 of this rotating assembly is a plate 8 on which roller holders 10 are fixed using mounting pins 9. Sub-frame 3 and the static part 6 of the rotating assembly together form a first frame. The rotatable part 7 of the rotating assembly, plate 8 and roller holders 10 together form a second frame, which is rotatable about a rotation axis perpendicular to the longitudinal and transverse direction of the truck. In roller holders 10 is received a coupling shaft 11 which is mounted on trailer chassis 2 and which is displaceable along the length of these roller holders 10 by means of roller bearings 12. Coupling shaft 11 is enclosed in its longitudinal direction by wearing plates 13 connected releasably to trailer chassis 2. The figure further shows a system of hingedly coupled arms 14, 15, a first arm 14 of which is hingedly coupled to trailer chassis 2 and (by means of a second arm 15) to plate 8 of the rotatable frame, and functions as lever 14, which is furthermore coupled hingedly to a brake cable 16. Brake cable 16 is pulled tight in a situation where the truck brakes and the semi-trailer overruns due to its linear momentum, i.e. displaces in forward direction (to bottom left in the figure) relative to the truck, wherein coupling shaft 11 is pressed by means of its roller bearings 12 in forward direction in roller holders 10, wherein brake lever 14, held fixedly at one end by arm 15, is pulled forward at its other end by trailer chassis 2, as a result of which the brake cable 16 is pulled and the overrun of the semi-trailer is braked. In order to prevent a jolting movement of the semi-trailer relative to the truck, a damper 17 of a per se known type is built in between trailer chassis 2 and plate 8 of the rotatable frame.

Fig. 2 shows a coupling device 21 for coupling a trailer, of which a part of chassis 22 is shown, to the bogie of a trailer, of which a part of chassis 23 with wheel suspension 25 and brake drums 27 is shown, wherein the bogie is coupled to a tractive vehicle using a per se known pole. Coupling device 21 comprises the static part 6 of a rotating assembly which is fixed on bogie frame 23 by means of bolts 5, and the rotatable part 7 of this rotating assembly, onto which is fixed a plate 8 on which roller holders 10 are fixed using mounting pins 9. The static part 6 of the rotating assembly forms a first frame. The rotatable part 7 of the rotating assembly, plate 8 and roller holders 10 together form a second frame rotatable about a rotation axis perpendicular to the longitudinal and transverse direction of the bogie. In roller holders 10 is received a coupling shaft 11 which is mounted on trailer chassis 22 and which is displaceable along the length of these roller holders 10 by means of roller bearings 12. Coupling shaft 11 is enclosed in its longitudinal direction by wearing plates 13 connected releasably to trailer chassis 22. The figure further shows a lever 14 which is coupled hingedly to trailer chassis 22 and which is coupled to plate 8 of the rotatable frame by means of a brake cable 26 leading to the front wheels of the trailer, and which is further coupled hingedly to a brake cable 16 leading to the rear wheels of the trailer. Brake cables 16, 26 are pulled tight in a situation where the bogie brakes, and the trailer overruns due to its linear momentum, i.e. displaces in forward direction relative to the bogie, wherein coupling shaft 11 is pressed by means of its roller bearings 12 in forward direction in roller holders 10, wherein brake lever 14, held fast at one end as soon as brake cable 26 for the front wheels is pulled tight, is pulled forward at its other end by trailer chassis 22, as a result of which the brake cable for the rear wheels 16 is pulled tight and overrunning of the trailer is braked. In order to prevent a jolting movement of the trailer relative to the truck, a damper 17 of a per se known type is built in between trailer chassis 2 and plate 8 of the rotatable frame.

It has been found that the travel comfort of a vehicle pulling a trailer provided with a coupling device according to the invention is greatly enhanced relative to the comfort in a vehicle pulling a trailer provided with a known coupling device and a control for an overrun brake built into the pole. In this latter combination the brakes of the trailer are activated simultaneously at the moment that the trailer overruns, i.e. presses with its full mass against the tractive vehicle. In a combination according to the invention the brakes of the front wheels are already activated at the moment before the trailer presses with its full mass against the tractive vehicle, this being perceived by the driver of the tractive vehicle as an significant improvement in the travel comfort.

## Claims

1. Coupling device (1, 21) for coupling a non-autonomously driven transport means to a tractive device, comprising
a first frame (3, 6) mountable on a tractive device,
a second frame (7, 8, 10) which is mountable on the first frame (3, 6) and which is rotatable about a rotation axis perpendicular to the longitudinal and transverse direction of the tractive device, and
a coupling shaft (11) which is connected to the transport means and oriented in transverse direction thereof and which is coupled to the second frame (7, 8, 10) in a manner such that it is displaceable through a determined distance relative to the second frame (7, 8, 10) in transverse direction perpendicularly of said rotation axis, said coupling device (1, 21) being provided with operating means (14) for a braking device, **characterized in that** the operating means comprise a lever (14) coupled hingedly to the transport means and to the second frame (7, 8, 10), which lever (14) is further coupled hingedly to a brake cable (16, 26) in a manner such that, when the transport means displace relative to the second frame (7, 8, 10) as the distance between the transport means and the second frame (7, 8, 10) decreases, the brake cable (16, 26) is pulled tight by the lever (14).

2. Coupling device (1, 21) as claimed in claim 1, **characterized in that** the coupling shaft (11) is coupled to the second frame (10) by means of roller bearings (12).

3. Coupling device (1, 21) as claimed in any of the claims 1-2, **characterized in that** the coupling shaft (11) is enclosed in its longitudinal direction between enclosing elements (13) connected releasably to the transport means.

4. Coupling device (1, 21) as claimed in any of the claims 1-3, **characterized in that** the first and the second frame comprise co-acting parts of a rotating assembly (6, 7).

5. Coupling device (1, 21) as claimed in any of the claims 1-4, wherein the transport means is a semi-trailer and the tractive device is a motor vehicle.

6. Coupling device (1, 21) as claimed in any of the claims 1-5, wherein the transport means is the fixed part of a trailer and the tractive device is the bogie of said trailer.

## Patentansprüche

1. Kuppelvorrichtung (1, 21) zum Kuppeln eines nicht autonom angetriebenen Transportmittels an eine Zugvorrichtung, umfassend
ein auf eine Zugvorrichtung montierbares erstes Gestell (3, 6),
ein auf das erste (3, 6) Gestell montierbares zweites Gestell (7, 8, 10), das um eine Rotationsachse senkrecht auf der Längs- und Querrichtung der Zugvorrichtung rotierbar ist, und
eine mit dem Transportmittel verbundene in Querrichtung dazu ausgerichtete Kuppelwelle (11), welche mit dem zweiten Gestell (7, 8, 10) in einer derartigen Weise gekoppelt ist, dass diese gegenüber dem zweiten Gestell (7, 8, 10) über eine bestimmte Distanz in transversaler Richtung senkrecht zu der genannten Rotationsachse verschiebbar ist, welche Kuppelvorrichtung (1, 21) mit Bedienungsmitteln (14) für eine Bremsvorrichtung versehen ist, **dadurch gekennzeichnet, dass** die Bedienungsmittel einen scharnierbar an dem Transportmittel und an dem zweiten Gestell (7, 8, 10) gekoppelten Hebel (14) enthalten, welcher Hebel (14) weiter scharnierbar mit einem Bremskabel (16, 26) verbunden ist, auf eine derartige Weise, dass bei der Verschiebung des Transportmittels gegenüber dem zweiten Gestell (7, 8, 10) bei sich verringernder Distanz zwischen dem Transportmittel und dem zweiten Gestell (7, 8, 10) das Bremskabel (16, 26) durch den Hebel (14) angezogen wird.

2. Kuppelvorrichtung (1, 21) nach Anspruch 1, **dadurch gekennzeichnet, dass** die Kuppelwelle (11) mittels Rollenlager (12) an das zweite Gestell (10) gekoppelt ist.

3. Kuppelvorrichtung (1, 21) nach einem der Ansprüche 1-2, **dadurch gekennzeichnet, dass** die Kuppelwelle (11) in ihrer Längsrichtung zwischen lösbar mit dem Transportmittel verbundenen Sicherungselementen (13) eingeschlossen ist.

4. Kuppelvorrichtung (1, 21) nach einem der Ansprüche 1-3, **dadurch gekennzeichnet, dass** das erste und das zweite Gestell zusammenarbeitende Teile eines Drehkranzes (6, 7) enthalten.

5. Kuppelvorrichtung (1, 21) nach einem der Ansprüche 1-4, wobei das Transportmittel ein Sattelauflieger ist und die Zugvorrichtung ein Kraftfahrzeug ist.

6. Kuppelvorrichtung (1, 21) nach einem der Ansprüche 1-5, wobei das Transportmittel der feste Teil eines Anhängers ist und die Zugvorrichtung das Drehgestell dieses Anhängers ist.

## Revendications

1. Dispositif d'accouplement (1, 21) pour coupler un moyen de transport sans traction autonome à un dispositif de traction, comprenant:
un premier cadre (3, 6) qui peut être monté sur un dispositif de traction,
un second cadre (7, 8, 10) qui peut être monté sur le premier cadre (3, 6), et qui peut tourner autour d'un axe de rotation qui est perpendiculaire à la direction longitudinale et transversale du dispositif de traction, et
un arbre d'accouplement (11) qui est connecté au moyen de transport et orienté dans la direction transversale de celui-ci, et qui est couplé au second cadre (7, 8, 10) de telle sorte qu'il puisse être déplacé d'une distance déterminée par rapport au second cadre (7, 8, 10) dans une direction transversale perpendiculairement audit axe de rotation, ledit dispositif d'accouplement (1, 21) étant pourvu de moyens de commande (14) pour un dispositif de freinage, **caractérisé en ce que** les moyens de commande comprennent un levier (14) qui est couplé de façon articulée au moyen de transport et au second cadre (7, 8, 10), ledit levier (14) étant en outre couplé de façon articulée à un câble de frein (16, 26) de telle sorte que, lorsque le moyen de transport se déplace par rapport au second cadre (7, 8, 10) de telle sorte que la distance entre le moyen de transport et le second cadre (7, 8, 10) diminue, le câble de frein (16, 26) soit tiré et tendu par le levier (14).

2. Dispositif d'accouplement (1, 21) selon la revendication 1, **caractérisé en ce que** l'arbre d'accouplement (11) est couplé au second cadre (10) au moyen de roulements à rouleaux (12).

3. Dispositif d'accouplement (1, 21) selon l'une quelconque des revendications 1 à 2, **caractérisé en ce que** l'arbre d'accouplement (11) est coincé dans sa direction longitudinale entre des éléments de confinement (13) qui sont connectés de façon détachable au moyen de transport.

4. Dispositif d'accouplement (1, 21) selon l'une quelconque des revendications 1 à 3, **caractérisé en ce que** les premier et second cadres comprennent des parties coopérantes d'un ensemble rotatif (6, 7).

5. Dispositif d'accouplement (1, 21) selon l'une quelconque des revendications 1 à 4, dans lequel le moyen de transport est une semi-remorque et le dispositif de traction est un véhicule à moteur.

6. Dispositif d'accouplement (1, 21) selon l'une quelconque des revendications 1 à 5, dans lequel le moyen de transport est la partie fixe d'une remorque, et le dispositif de traction est le train roulant de ladite remorque.
